(19) Europäisches Patentamt
European Patent Office
Office européen des brevets

(11) **EP 4 064 633 B1**

(12) **EUROPEAN PATENT SPECIFICATION**

(45) Date of publication and mention
of the grant of the patent:
**19.02.2025 Bulletin 2025/08**

(21) Application number: **20895011.3**

(22) Date of filing: **22.10.2020**

(51) International Patent Classification (IPC):
*H04L 67/01* $^{(2022.01)}$      *H04L 45/16* $^{(2022.01)}$
*H04L 69/04* $^{(2022.01)}$

(52) Cooperative Patent Classification (CPC):
**H04L 69/04; H04L 45/16; H04L 67/01;** Y02D 10/00

(86) International application number:
**PCT/CN2020/122768**

(87) International publication number:
**WO 2021/109744 (10.06.2021 Gazette 2021/23)**

(54) **DATA COMPRESSION METHOD AND APPARATUS, NETWORK DEVICE, AND STORAGE MEDIUM**

DATENKOMPRESSIONSVERFAHREN UND -VORRICHTUNG, NETZWERKVORRICHTUNG UND SPEICHERMEDIUM

PROCÉDÉ ET APPAREIL DE COMPRESSION DE DONNÉES, DISPOSITIF DE RÉSEAU, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2019  CN 201911214787**

(43) Date of publication of application:
**28.09.2022  Bulletin 2022/39**

(73) Proprietor: **ZTE Corporation**
**Shenzhen, Guangdong 518057 (CN)**

(72) Inventors:
• **XU, Benchong**
**Shenzhen, Guangdong 518057 (CN)**
• **WANG, Huilai**
**Shenzhen, Guangdong 518057 (CN)**
• **ZHU, Yongqing**
**Shenzhen, Guangdong 518057 (CN)**
• **TANG, Hong**
**Shenzhen, Guangdong 518057 (CN)**

(74) Representative: **Zoli, Filippo**
**Brunacci & Partners S.r.l.**
**Via Pietro Giardini, 625**
**41125 Modena (IT)**

(56) References cited:
**CN-A- 102 968 804       CN-A- 108 696 438**
**US-A1- 2016 127 139     US-A1- 2016 127 142**
**US-A1- 2019 149 468**

## Description

## TECHNICAL FIELD

This application relates to the technical field of communication, and in particular, to a data compression method, a network device, and a storage medium.

## BACKGROUND

Multicast technology is playing an increasingly important role in the current Internet, and is applied to interactive personality TV (IPTV), net-meeting, live matches, and the like. With the increasing network scale and multicast data traffic, the multicast technology faces more and more challenges in terms of cost, operation and maintenance. To this end, the industry proposed a new technology for constructing a multicast forwarding path, which is called bit indexed explicit replication (BIER) technology.

BIER only uses one bit to indicate all the nodes at the edge of the network. The multicast traffic is transmitted in the intermediate network, and a specific BIER message header is additionally encapsulated. This message header marks all the destination nodes of the multicast flow in the form of a bit string (BitString). An intermediate network forwarding device routes according to the bit to ensure that the traffic can be sent to all destination nodes. The intermediate node forwarding device forwards the node information in advance through an internal protocol to form a bit index forwarding table (BIFT) for guiding BIER forwarding. When receiving the traffic encapsulated with the BIER message header, the forwarding of a message to a destination node is completed according to BIFT.

At present, a BitString of BIER occupies a lot of message space, and its length varies with the change of BitString Length (BSL). Each bit of the BitString indicates one multicast receiver. Generally, only some multicast receivers are interested in one multicast flow, so that a large number of bits are not set, which will result in a large number of invalid data. When forwarding using BIER, bit operations need to be performed on the BitString, and an excessively long BitString may also cause additional computational overhead. Meanwhile, the table entry management of a device has the same problem, and many invalid BitStrings may occupy memory space.

In US20160127142A1, a network device executes a method to forward a packet that is encoded using an explicit block encoding of multicast group membership information with Bit Index Explicit Replication. The method includes receiving a packet, where the packet includes a bitstring having a set of blocks, each block including a set identifier field and a SubBitString field. The method further includes selecting a block for processing, finding a first bit position of a SubBitString identifying a destination bit-forwarding router (BFR), looking up a forwarding bitmask for the destination BFR and a next-hop to reach the destination BFR in a bit index forwarding table, creating a copy of the packet, applying a bit-wise AND operation on the copy of the packet with the forwarding bitmask, forwarding the copy of the packet to the next-hop, and applying a bit-wise AND operation on the packet with an inverse of the forwarding bitmask.

In US20160127139A1, A network device executes a method to forward a packet that is encoded using an explicit list encoding of sparse multicast group membership information with Bit Index Explicit Replication. The method includes receiving a packet that includes a bitstring having a list of Bit Forwarding Router IDs (BFR-ids). The method further includes selecting a BFR-id identifying a destination Bit Forwarding Router (BFR) from the list for processing, looking up a forwarding bitmask for the destination BFR and a next-hop to reach the destination BFR in a bit index forwarding table, creating a copy of the packet, clearing the selected BFR-id from the packet, clearing BFR-ids from the packet and the copy of the packet based on the forwarding bitmask, and forwarding the copy of the packet to the next-hop neighbor.

## SUMMARY

The present application provides a data compression method, a network device, and a storage medium.

The features of the data compression method, the network device, and the storage medium according to embodiments of the present application are set out in the appended set of claims.

With regard to the above embodiments and other aspects of the present application, as well as implementations thereof, further description is provided in the Brief Description of Drawings, the Detailed Description and the Claims.

## BRIEF DESCRIPTION OF DRAWINGS

FIG. 1 is a flowchart of a data compression method in an embodiment of the present application;

FIG. 2 is a schematic diagram of BIER topology in an embodiment of the present application;

FIG. 3 is a flowchart of a data compression and transmission method in an embodiment of the present application;

FIG. 4 is a schematic diagram of a message header structure in an embodiment of the present application;

FIG. 5 is a schematic diagram of a forwarding table in an embodiment of the present application; and

FIG. 6 is a schematic diagram of a data compression apparatus in an embodiment of the present application.

## DETAILED DESCRIPTION

In order to make the objectives, technical schemes and advantages of the present application clearer, the embodiments of the present application will be described in detail below with reference to the accompanying drawings. It should be noted that, the embodiments in the present application and the features in the embodiments may be arbitrarily combined to derive other embodiments not explicitly described.

Embodiments

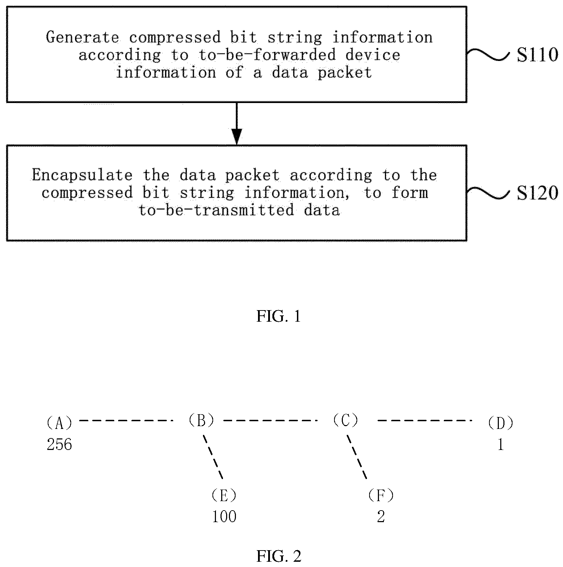

FIG. 1 is a flowchart of a data compression method provided by an embodiment of the present application. This embodiment may be applied to compress BitString in the message header of encapsulated data in the process of data forwarding using BIER. The method may be executed by a data compression apparatus provided by the embodiment of the present application, the data compression apparatus may be implemented by software and/or hardware, and may generally be integrated into a network device. The method may be applied to a network communication system based on BIER technology for data forwarding. As shown in FIG. 1, the method may include steps S110 and S120.

At S110, compressed bit string information is generated according to to-be-forwarded device information of a data packet, where the compressed bit string information includes at least one valid bit data and valid position information corresponding to each of the valid bit data, the valid bit data includes a valid bit in standard bit string information, the valid bit data is configured to determine a next forwarding device that receives the data packet, the valid position information includes a position of a corresponding valid bit data in the standard bit string information, and an information length of the standard bit string information is greater than an information length of the compressed bit string information.

The data packet is configured for transmission in a network, such as transmission from one router to another router. The to-be-forwarded device information may refer to the identification information of the next forwarding device for data packet transmission, where the identification information is configured to identify the next forwarding device, and may include, for example, the name and/or Identity (ID) of the next forwarding device.

The compressed bit string information is configured to encapsulate the data packet and generate the message header of the data packet. The standard bit string information is also configured to encapsulate the data packet and generate the message header of the data packet. The standard bit string information is actually the information generated by the existing bit string standard algorithm. The compressed bit string information is equivalent to the bit string information formed by compressing the standard bit string information. The compressed bit string information is configured to replace the standard bit string information to encapsulate the data packet, generate the message header, and reduce the space occupied by the message header. Exemplarily, the compressed bit string information and the standard bit string information are BitStrings. One BitString includes a number of bits. Bit is the smallest storage unit of a computer. Generally, the value of a bit is indicated by 0 or 1.

In the forwarding mechanism based on BIER, each network device corresponds to each bit in BitString, and whether the corresponding network device receives the data packet is indicated by setting information (i.e., whether or not it is set to 1) in BitString. For example, the value of the first bit from left to right in BitString is 1, indicating that the data packet needs to be sent to the network device corresponding to the first bit from left to right, and when the network device receives the data packet, the value of the first bit from left to right in BitString becomes 0. It can be understood that the more bits set to 1 in BitString, the more network devices to receive data packets; and the fewer bits set to 1 in BitString, the fewer network devices to receive data packets. Therefore, according to the bit with a value of 1 in BitString, the next forwarding device that receives the data packet may be determined.

The valid bit data may refer to the valid bit in the standard bit string information, and exemplarily, may refer to the bit set to 1 in BitString. In this case, the valid bit data indicates a bit with a value of 1 in BitString, and the next forwarding device that receives the data packet may be determined, so that the valid bit data is configured to determine the next forwarding device that receives the data packet.

The valid position information includes a position of the valid bit data in the standard bit string information. Exemplarily, as in the previous example, the value of the first bit from left to right in BitString is 1, and this bit is the valid bit data, and correspondingly, the first bit from left to right is the valid position information corresponding to the valid bit data.

The information length of the standard bit string information is greater than the information length of the compressed bit string information, indicating that the number of bits included in the standard bit string information is greater than the number of bits included in the compressed bit string information, that is, the space occupied by the standard bit string information is larger than the space occupied by the compressed bit string information.

In an exemplary implementation, the generating compressed bit string information according to to-be-forwarded device information of a data packet includes: obtaining a device identification value of at least one next forwarding device of the data packet; and calculating the valid bit data corresponding to the device identification value and the valid position information of the valid bit data in the standard bit string information.

The device identification value is configured to uniquely identify the next forwarding device, and next forwarding devices identified by different device identification values are different. The next forwarding device is a receiver of the data packet. The device identification value is a numerical value and may be calculated. Specifically, as shown in FIG. 2, in the BIER topology diagram, the device identification value of the next forwarding device A is 256, the device identification value of the next forwarding device E is 100, the device identification value of the next forwarding device F is 2, and the device identification value of the next forwarding device D is 1.

In the existing forwarding mechanism based on BIER, according to the predetermined mapping rule, the device identification values of at least one next forwarding device are mapped into bit string information respectively, and the standard bit string information is formed by calculating the union of the bit string information, so that the bits in the standard bit string information correspond to the next forwarding devices one by one.

In the embodiment of the present application, the device identification value is mapped into shorter bit string information to form the compressed bit string information.

Specifically, calculating the valid bit data corresponding to the device identification value and the valid position information of the valid bit data in the standard bit string information includes: extracting a bit set to 1 from the standard bit string information and a position of the bit set to 1 in the standard bit string information, and establishing a mapping relationship between the device identification value of the next forwarding device and the valid bit data and the corresponding valid position information, so as to ensure that the next forwarding device may be uniquely determined according to the valid bit data and the corresponding valid position information. By replacing all the bits in the standard bit string information with the valid bit data and the valid position information, which is equivalent to eliminating the information of the bits corresponding to the network devices that do not need to be forwarded in the standard bit string information, thereby reducing the invalid data in the standard bit string information.

According to the device identification value, the valid bit data and the valid position information are calculated, and the corresponding relationship between the device identification value and the valid bit data and the valid position information is established, so that the next forwarding device can be accurately determined based on the compressed bit string information, thereby ensuring that the data packet can be accurately sent to the next forwarding device and improving the accuracy of data forwarding.

In an exemplary implementation, the calculating the valid bit data corresponding to the device identification value and the valid position information of the valid bit data in the standard bit string information includes: determining a valid length corresponding to the valid bit data according to a preset valid data type; and determining the valid bit data corresponding to the device identification value and the valid position information of the valid bit data in the standard bit string information according to the device identification value and the valid length.

The valid data types may include BYTE, WORD16, WORD32, or WORD64, and the like. The valid data type refers to a data type of the valid bit data, and is configured to determine the valid length. The valid length refers to the length of the valid bit data, and is configured to determine the number of bits included in the valid bit data. Exemplarily, the valid data type is BYTE, and the corresponding valid length is 8, that is, the number of bits included in the valid bit data is 8.

Actually, the standard bit string information is configured to indicate whether N forwarding devices receive the data packet. Each forwarding device is generally indicated by 1 bit, and the bit set to 1 indicates that the corresponding forwarding device receives the data packet; the bit set to 0 indicates that the corresponding forwarding device does not receive the data packet. Exemplarily, the information length of the standard bit string information is 256 bits, that is, the standard bit string information may indicate 256 forwarding devices and whether each forwarding device receives the data packet.

The compressed bit string information is simplified standard bit string information, but is still required to indicate whether the N forwarding devices receive the data packet. Compared with the standard bit string information, the compressed bit string information may be regarded as dividing the standard bit string information into a plurality of groups according to the valid length, and each group may indicate the same number of bits (forwarding devices), which is equal to the valid length.

Actually, the bits in some groups are all set to 0, which are invalid data and are not reflected in the compressed bit string information. The compressed bit string information only includes groups with bits set to 1. In the embodiment of the present application, the valid bit data indicates a group with a bit set to 1, and the valid position information indicates which group it is in the standard bit string information, that is, the position of the group in the standard bit string information.

The valid length of the valid bit data actually indicates the number of forwarding devices (bits) that the valid bit data can indicate. The length of the valid position information indicates the number of the aforementioned groups. Therefore, the product of the length of the valid position information and the valid length is the information length of the standard bit string information, thereby ensuring that the compressed bit string information can completely indicate the bits of the standard bit string information and avoiding omission.

Exemplarily, the standard bit string information is xxxx xxxx, which indicates whether eight forwarding devices receive the data packet. For example, the standard bit string information is 0000 0100, which indicates that the third forwarding device receives the data packet, while other forwarding devices do not receive the data packet. For example, the valid length of the valid bit data is 4, that is, one group may indicate whether four forwarding devices receive the data packet, and the product of the length of the valid position information and the valid length is the information length of the standard bit string information. Correspondingly, 8/4=2, and the valid position information is 2, indicating that there may be two groups in total, and each group indicates whether four forwarding devices receive the data packet, so two groups may indicate whether eight forwarding devices receive the data packet. Specifically, the groups are 0000 and 0100, respectively. The third forwarding device receives the data packet, and only one group has a bit set to 1, which represents valid bit data. Correspondingly, the valid bit data is 0100 and the valid position information is 01.

The valid data type of the valid bit data may be set as required, so as to adjust the compression degree of the compressed bit string information. Specifically, the more concentrated the bits set to 1, the longer the valid length of the valid bit data. In this case, all the bits set to 1 may be indicated by a few valid bit data, and the information length of compressed bit string information is smaller; while the shorter the valid length of the valid bit data, the more the valid bit data needed to indicate all the bits set to 1, and the longer the information length of the compressed bit string information. Correspondingly, the case that the bits set to 1 are scattered is contrary to the above case.

By determining the valid bit data according to the device identification value in combination with the valid length determined by the valid data type, the number of bits included in the valid bit data may be configured according to the valid data type, thereby implementing the adjustment of the information length of the compressed bit string information.

In an exemplary implementation, the determining the valid bit data corresponding to the device identification value according to the device identification value and the valid length includes: calculating a remainder obtained by dividing a difference between the device identification value and 1 by the valid length; and setting a bit at a position where a first empty bit string information matches the remainder, to form the valid bit data corresponding to the device identification value.

The first empty bit string information is configured to form valid bit data, specifically, the value of the first empty bit string information is 1, specifically, a BitString with a value of 1 in the first bit from right to left. Setting a bit refers to changing the value of the bit to 1.

Specifically, the valid bit data is generated based on the following formula:

$$ShortBitString[i]=1<<((Bfr\text{-}id\text{-}1)\% \; Length)$$

where ShortBitString is a valid bit data set, including a plurality of valid bit data ShortBitString[i], the ShortBitString[i] is the $i^{th}$ valid bit data, Bfr-id is the device identification value, and Length is the valid length determined according to the valid data type of ShortBitString[i].

Exemplarily, ShortBitString[i] is an array of BYTE type, and correspondingly, the Length is 8. BIER uses the standard bit string information of 256 BSL, correspondingly, Bitmap=256/8=32. In this case, the first empty bit string information is 0000 0001. ShortBitString[i]=1<<x, indicating that the bits set to 1 are shifted to the left by x bits based on the first empty bit string information. It should be noted that numbers in other systems (such as 0 x for hexadecimal) need to be converted to binary for left shift operation.

In one specific example, Bfr-id is 1, (Bfr-id-1)% Length=(1-1)%8=0, ShortBitString[0]=1<<0, that is, ShortBitString[1] is 0000 0001=0x01.

For another example, Bfr-id is 2, (Bfr-id-1)% Length=(2-1)%8=1, ShortBitString[1]=1<<1, that is, ShortBitString[1] is 0x02.

For another example, Bfr-id is 100, (Bfr-id-1)% Length=(100-1)%8=3, ShortBitString[2]=1<<3, that is, ShortBitString[2] is 0x08.

For another example, Bfr-id is 256, (Bfr-id-1)% Length=(256-1)%8=7, ShortBitString[3]=1<<7, that is, ShortBitString[3] is 0x80.

By taking the remainder obtained by dividing the difference between the device identification value and 1 by the valid length as valid bit data, the valid data may be accurately extracted to ensure the accuracy of the valid bit data.

In an exemplary implementation, the determining the valid position information of the valid bit data in the standard bit string information according to the device identification value and the valid length includes: calculating a quotient by dividing the difference between the device identification value and 1 by the valid length; and setting a bit at a position where a second empty bit string information matches the quotient, to form the valid position information of the valid bit data in the standard bit string information.

The second empty bit string information is configured to form the valid position information corresponding to the valid bit data. Specifically, the second empty bit string information may be a BitString with a value of 1 in the first bit from right to left, or a BitString with a value of 1 in the first bit from left to right.

The valid position information is generated based on the following formula:

$$Bitmap=1<<((Bfr\text{-}id\text{-}1)/Length)$$

Exemplarily, ShortBitString is an array of BYTE type, BIER uses the standard bit string information of 256 BSL, correspondingly, Length is 8, Bitmap=32, that is, Btimap is data of one WORD32. The second empty bit string information may be a BitString with a value of 1 in the first bit from right to left. That is, the second empty bit string information is 0000 0000 0000 0000 0000 0000 0000 0001. Bitmap =1<<x, indicating that the bits set to 1 are shifted to the left by x bits based on the second empty bit string information. It should be noted that numbers in other systems (such as 0 x for hexadecimal) need to be converted to binary for left shift operation.

In one specific example, Bfr-id is 1, (Bfr-id-1)/Length=(1-1)/8=0, Bitmap=1<<0, that is, Bitmap is 0000 0000 0000 0000 0000 0000 0000 0001 = 0x00000001. Correspondingly, the bit string information corresponding to Bfr-id being 1 is Bitmap:ShortBitString [1]= 0x00000001:0x01, which occupies 5 bytes, while the standard bit string information is a BitString with a length of 256 bits, in which the value of the rightmost first bit is 1, and the standard bit string information occupies 32 bytes.

For another example, Bfr-id is 2, (Bfr-id-1)/Length=(2-1)/8=0, Bitmap=1<<0, that is, Bitmap is 0x00000001. Correspondingly, the bit string information corresponding to Bfr-id being 2 is Bitmap:ShortBitString [1]= 0x00000001:0x02, which occupies 5 bytes, and the standard bit string information is a BitString with a length of 256 bits, in which the value of the second bit from right to left is 1, and the standard bit string information occupies 32 bytes.

For another example, Bfr-id is 100, (Bfr-id-1)/Length=(100-1)/8=12, Bitmap=1<<12, that is, Bitmap is 0x00001000. Correspondingly, the bit string information corresponding to Bfr-id being 100 is Bitmap:ShortBitString [1]= 0x00001000:0x08, which occupies 5 bytes, and the standard bit string information is a BitString with a length of 256 bits, in which the value of the 100th bit from right to left is 1, and the standard bit string information occupies 32 bytes.

For another example, Bfr-id is 256, (Bfr-id-1)/Length=(256-1)/8=31, Bitmap=1<<31, that is, Bitmap is 0x80000000. Correspondingly, the bit string information corresponding to Bfr-id being 256 is Bitmap:ShortBitString [1]= 0x80000000:0x80, which occupies 5 bytes, and the standard bit string information is a BitString with a length of 256 bits, in which the value of the 256th bit from right to left is 1, and the standard bit string information occupies 32 bytes.

It should be noted that the valid position information may also be generated based on the following formula:

$$Bitmap=1>>((Bfr\text{-}id\text{-}1)/Length)$$

In this case, the second empty bit string information may be a BitString with a value of 1 in the first bit from left to right.

In the compressed bit string information Bitmap:ShortBitString, actually, the bit with a value of 1 in the Bitmap indicates the position of the corresponding ShortBitString[i] in BitString. The least significant digit of the bit with a value of 1 in the Bitmap may be used to indicate the position of the ShortBitString[i] with the smallest i in BitString, and the most significant digit of the bit with a value of 1 in the Bitmap may be used to indicate the position of the ShortBitString[i] with the largest i in BitString. For example, Bitmap:ShortBitString= 0x80001001:0x01 0x08 0x80, the included valid bit data and the corresponding valid position information are Bitmap:ShortBitString[0]= 0x00000001:0x01, Bitmap:ShortBitString[1]= 0x00001000:0x08, and Bitmap: ShortBitString[2]= 0x80000000:0x80, respectively.

The least significant digit of the bit with a value of 1 in the Bitmap may be used to indicate the position of the ShortBitString[i] with the largest n in BitString, and the most significant digit of the bit with a value of 1 in the Bitmap may be used to indicate the position of the Short-BitString[i] with the smallest n in BitString, which is not specifically limited in this embodiment of the present application. Accordingly, the number of bits with a value of 1 in the Bitmap is the same as the number of Short-BitString[i]. For example, Bitmap:ShortBitString= 0x80001001:0x01 0x08 0x80, the included valid bit data and the corresponding valid position information are Bitmap:ShortBitString[0]= 0x80000000:0x01, Bitmap:ShortBitString[1]= 0x00001000:0x08, and Bitmap: ShortBitString[2]= 0x00000001:0x80, respectively.

By taking the quotient obtained by dividing the difference between the device identification value and 1 by the valid length as the valid position information corresponding to the valid bit data, the position of the valid data in the standard bit string can be accurately determined, thereby reducing the invalid data in the compressed bit string information and the information length of the compressed bit string information.

In one example, ShortBitString[i] is an array of WORD32 type, and correspondingly, Length is 32. BIER uses the standard bit string information of 4096 BSL. Correspondingly, Bitmap=4096/32=128, that is, Btimap is four WORD32 data.

In one specific example, Bfr-id is 1, (Bfr-id-1)/Length=(1-1)/32=0, Bitmap=1<<0, that is, Bitmap is 0x00000000 0x00000000 0x00000000 0x00000001. (Bfr-id-1)%Length=(1-1)%32=0, ShortBitString[0] =1<<0, that is, ShortBitString[0] is 0x00000001. Correspondingly, the bit string information corresponding to Bfr-id of 1 is Bitmap:ShortBitString [0]= 0x00000000 0x00000000 0x00000000 0x00000001: 0x00000001, which occupies 20 bytes, and the standard bit string information is a BitString with a length of 256 bits, in which the value of the rightmost first bit is 1, and the standard bit string information occupies 4096/8=512 bytes.

In an exemplary implementation, the generating compressed bit string information includes: calculating a union of each of the valid bit data as valid bit string information; calculating a union of the valid position information corresponding to each of the valid bit data as position mapping information corresponding to the valid bit string information; and taking the valid bit string information and the corresponding position mapping information as the compressed bit string information.

The valid bit string information includes at least one valid bit data. The position mapping information includes at least one valid position information. The valid bit string information and the position mapping information are combined to form compressed bit string information.

The valid bit data corresponding to the device identification values of all the next forwarding devices of the data packet are merged, and the corresponding valid position information is merged at the same time. The information of all the next forwarding devices is aggregated to form compressed bit string information, so that the compressed bit string information encapsulates the data packet, further reducing the space occupied by the message header, and ensuring the correct forwarding of the data packet.

The standard bit string information packet is BitString obtained by OR operation of BitStrings corresponding to a plurality of Bfr-ids. Exemplarily, the standard bit string information formed by Bfr-ids 1, 2, 100 and 256 is the 1st, 2nd, 100th and 256th bits from the right of BitString with a length of 256 bits, and actually occupies 32 bytes.

Referring to the previous example, the Bfr-ids are 1, 2, 100, and 256, respectively; the corresponding ShortBitString[] are 0x01, 0x02, 0x08, and 0x80, respectively; and the corresponding valid position information are 0x00000001, 0x00000001, 0x00001000, and 0x80000000, respectively. Correspondingly, the union valid bit string information of four ShortBitString[] is 0x03, 0x08 and 0x80; and the union position mapping information of four valid position information is 0x80001001. Then the compressed bit string information is Bitmap:ShortBitString[]= 0x80001001:0x03 0x08 0x80. Actually, the compressed bit string information occupies 7 bytes.

At S120, the data packet is encapsulated according to the compressed bit string information, to form to-be-transmitted data.

The to-be-transmitted data is configured for transmission in the network. Specifically, in the forwarding mechanism based on BIER, the transmission is performed in a bit forwarding router.

The message header is formed according to the compressed bit string information, and added to the data packet to encapsulate the data packet, to form the to-be-transmitted data.

According to the data compression method and apparatus, the network device, and the storage medium provided by the embodiment of the present application, new compressed bit string information with smaller information length is generated by extracting the valid bit data in the standard bit string information and the positions of the valid bit data in the standard bit string information, which solves the problems of large message space occupied by bit string information in some scenarios and reduction in the efficiency of data packet forwarding due to large calculation data caused by a large amount of invalid data, reduces the space occupied by the bit string information corresponding to the data packet to be forwarded, and reduces the amount of data processed during the forwarding of the data packet, thereby improving the efficiency of data packet forwarding.

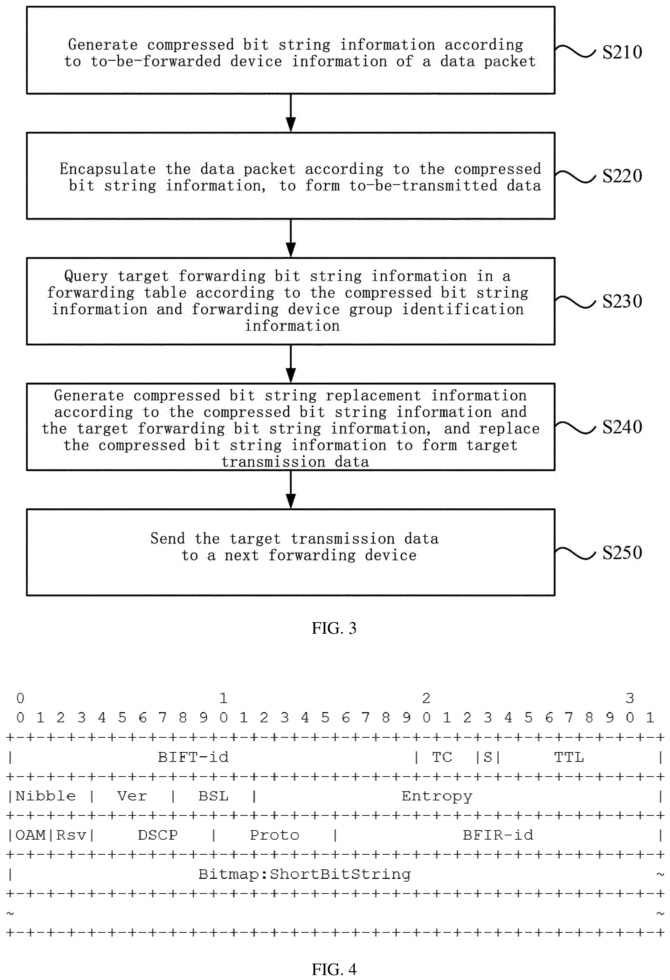

As shown in FIG. 3, In an exemplary implementation, the method of the embodiment of the present application may include steps S210 to S250.

At S210, compressed bit string information is generated according to to-be-forwarded device information of a data packet, where the compressed bit string information includes at least one valid bit data and valid position information corresponding to each of the valid bit data, the valid bit data includes a valid bit in standard bit string information, the valid bit data is configured to determine a next forwarding device that receives the data packet, the valid position information includes a position of a corresponding valid bit data in the standard bit string information, and an information length of the standard bit string information is greater than an information length of the compressed bit string information; and At S220, the data packet is encapsulated according to the compressed bit string information, to form to-be-transmitted data.

Packet encapsulation is actually the generation of a message header according to compressed bit string information. The message header is configured to provide information of to-be-transmitted data, which may include compressed bit string information, forwarding table identification information, device identification value, and the like.

Specifically, the structure of the BIER message header is shown in FIG. 4, and Bitmap:ShortBitString carried in the message header is the compressed bit string information.

At S230, target forwarding bit string information is queried in a forwarding table according to the compressed bit string information and forwarding device group identification information.

The forwarding device group identification information is configured to identify the set to which the next forwarding device belongs. The forwarding table is configured to determine the next forwarding device, and to modify the bit string information in the message header, so that the data packet is correctly sent to the next forwarding device. Then, the next forwarding device continues to query in the forwarding table according to the bit string information in the message header of the data packet, determines the next forwarding device and modifies the bit string information in the message header, and then continues to forward the data packet until the data packet is sent to the destination.

The forwarding bit information is recorded in the forwarding table, and is configured to generate compressed bit string replacement information to form a new message header. Specifically, the forwarding bit information is a forwarding bit mask (ForwardingBitMask, F-BM). The target forwarding bit information is the forwarding bit information corresponding to the valid bit data and forwarding device group identification information in the compressed bit string information, and may specifically include the target forwarding bit data and the target forwarding position information. The compressed bit string replacement information is configured to determine the device identification value of the next forwarding device, and forward the bit information, and then perform replacement, so that the next forwarding device continues to forward the data packet.

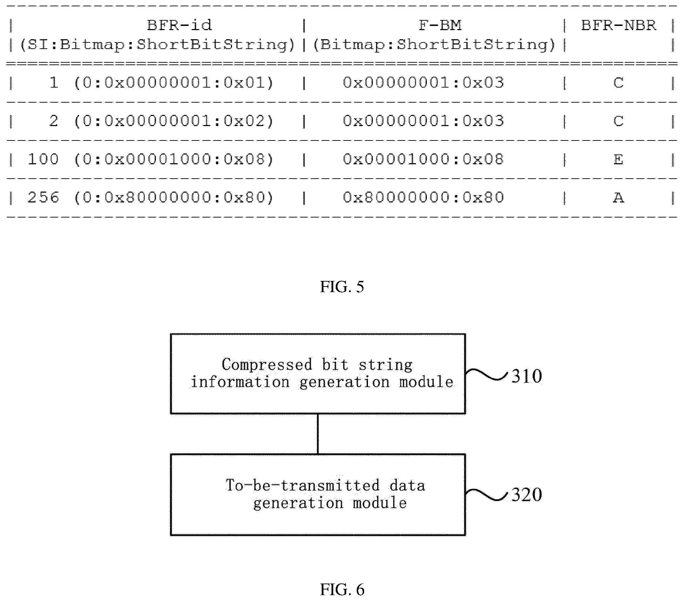

Exemplarily, the forwarding table is shown in FIG. 5, the first column shows the forwarding router number (forwarding device group identification information (SI): position mapping information (Bitmap): valid bit string information (ShortBitString)), the second column shows forwarding bit string information (F-BM), and the third column shows the identification information of the next forwarding device (BFR-NBR).

At S240, compressed bit string replacement information is generated according to the compressed bit string information and the target forwarding bit string information, and the compressed bit string information is replaced to form target transmission data.

The compressed bit string replacement information is configured to replace the compressed bit string information in the message header, and the data packet encapsulated with the new message header forms the target transmission data.

At S250, the target transmission data is sent to a next forwarding device.

The next forwarding device receives the target transmission data and processes the target transmission data. If the next forwarding device is not the destination of the data packet, the next forwarding device may extract the compressed bit string information from the target transmission data, query the local forwarding table, generate new compressed bit string replacement information to replace the compressed bit string information, and send the replaced target transmission data to the next forwarding device until the data packet reaches the destination.

In an exemplary implementation, the querying target forwarding bit string information in a forwarding table according to the compressed bit string information and forwarding device group identification information includes: extracting at least one target valid bit data and target valid position information corresponding to each of the target valid bit data from the compressed bit string information; querying target forwarding bit data matched with each of the target valid bit data and target forwarding position information matched with each of the target valid position information in a forwarding table according to each of the target valid bit data, target valid position information corresponding to each of the target valid bit data, and forwarding device group identification information; and the generating compressed bit string replacement information according to the compressed bit string information and the target forwarding bit string information, and replacing the compressed bit string information to form target transmission data, includes: calculating an intersection of the target forwarding bit data matched with the target valid bit data and the target valid bit data, and calculating an intersection of the target forwarding position information matched with the target valid position information and the target valid position information as the compressed bit string replacement information corresponding to the target valid bit data; generating a transmission data copy of the to-be-transmitted data; and replacing the compressed bit string information in the transmission data copy according to the compressed bit string replacement information corresponding to the target valid bit data, to form the target transmission data matched with the target valid bit data.

In the BIER forwarding mechanism, the forwarding device group identification information (SI) is configured to divide the forwarding devices. Actually, the forwarding device group identification information is configured to identify the forwarding device groups. In one forwarding device group, the device identification value uniquely identifies the forwarding device. As shown in the forwarding table in FIG. 5, the BFR-id is actually the device identification value of the current forwarding device, which may be uniquely determined according to the valid bit data, valid position information and forwarding device group identification information.

Actually, the compressed bit string information includes valid bit data corresponding to the device identification values of a plurality of next forwarding devices, and valid position information. When sending data packets, the data packets need to be sent to different next forwarding devices respectively, and the message headers of the data packets sent to different next forwarding devices are different. Therefore, it is necessary to extract each valid bit data and valid position information from the compressed bit string information, and generate message headers of data packets to be sent to different next forwarding devices respectively.

The compressed bit string information includes valid bit string information and corresponding position mapping information, the valid bit string information includes at least one valid bit data, and the position mapping information includes a plurality of valid position information. The method of extracting at least one target valid bit data and the target valid position information corresponding to each target valid bit data may be as follows: according to the mapping relationship between the target valid bit data and the target valid position information in the compressed bit string information, the target valid bit data are sequentially extracted from the valid bit string information, and the corresponding target valid position information is sequentially extracted from the position mapping information.

Exemplarily, starting from the least significant digit (or the most significant digit) with a value of 1 in the position mapping information, the target valid position information is extracted sequentially, and correspondingly, the target valid bit data corresponding to the target valid position information is extracted sequentially from the valid bit string information according to the mapping relationship between the target valid bit data and the target valid position information in the compressed bit string information. For example, Bitmap:ShortBitString[] = 0x80001001:0x01 0x08 0x80, the target valid position information is extracted from the least significant digit of the bit with a value of 1 in the position mapping information. The mapping relationship between the target valid bit data and the target valid position information in the compressed bit string information is that the least significant digit in the position mapping information with a value of 1 corresponds to the first target valid bit data from left to right in the valid bit string information, and so on; the extracted target valid position information and the corresponding target valid bit data are Bitmap:ShortBitString [0]= 0x00000001:0x01, Bitmap:ShortBitString[1]= 0x00001000:0x08, and Bitmap:ShortBitString[2]= 0x80000000:0x80, respectively.

An intersection of the target valid position information and the matched target forwarding position information, and an intersection of the corresponding target valid bit data and the matched target forwarding bit data are respectively calculated to obtain compressed bit string replacement information.

The transmission data copy refers to the data formed by copying the to-be-transmitted data. The target transmission data is the data for transmission to the next forwarding device. The message header of the transmission data copy is modified by the compressed bit string replacement information to form the target transmission data.

The message headers of the transmission data are respectively modified with the obtained different compressed bit string replacement information to obtain the target transmission data encapsulated by the different compressed bit string replacement information.

In one specific example, as shown in FIG. 2, the forwarding device B generates compressed bit string information, encapsulates the data packet, and needs to send the to-be-transmitted data to the forwarding devices A, D, E and F. The corresponding Bfr-ids are 1, 2, 100 and 256, respectively. When sending the data packet to the forwarding devices D and F, the forwarding device B needs to send the data packet to the forwarding device C first, and then the forwarding device C forwards the data packet to the forwarding devices D and F respectively.

The forwarding device B queries in the forwarding table shown in FIG. 5. For example, the target valid position information and the corresponding target valid bit data extracted from the compressed bit string information are Bitmap:ShortBitString[0]= 0x00000001:0x01, and at the same time, the forwarding device group identification information (SI) of the next forwarding device is obtained as 0. According to this query, the first row in the forwarding table shown in FIG. 5 is hit. The intersection of target valid position information Bitmap=0x00000001 and F-BM's target forwarding position information Bitmap= 0x00000001 is calculated as Bitmap= 0x00000001; and the intersection of the corresponding target valid bit data ShortBitString=0x01 and the target forwarding bit data ShortBitString=0x03 of F-BM is calculated as ShortBitString=0x01. The generated compressed bit string replacement information is Bitmap:ShortBitString= 0x00000001:0x01. The compressed bit string information in the message header of the transmission data copy is replaced with the compressed bit string replacement information to form the target transmission data, and the target transmission data is sent to the next forwarding device C.

Actually, the to-be-transmitted data may be copied multiple times for each next forwarding device.

After the target transmission data is sent to the next forwarding device C, the next target valid position information and the corresponding target valid bit data are extracted, the forwarding table is queried, and the compressed bit string replacement information is generated to update the compressed bit string information in the message header of the new transmission data copy, to form the target transmission data, and the target transmission data is sent to other next forwarding devices.

Additionally, after the target transmission data is sent to the next forwarding device C, the target valid position information and the corresponding target valid bit data corresponding to the compressed bit string replacement information in the message header of the target transmission data may also be deleted from the message header of the to-be-transmitted data. Therefore, when the compressed bit string information in the message header of the to-be-transmitted data is empty, it indicates that all the next forwarding devices have received the data packet.

The forwarding table is configured according to the data format in the compressed bit string information, at the same time, the valid bit data corresponding to each next forwarding device and the corresponding target valid position information are sequentially extracted from the compressed bit string information, the matched target forwarding bit string information is queried in the forwarding table to generate compressed bit string replacement information, and the compressed bit string information in the message header of the transmission data copy is updated to form the target transmission data, which is sent to the next forwarding device, so that the transmission data is encapsulated and forwarded according to the next forwarding device respectively, to ensure that the transmitted data is correctly forwarded to all next forwarding devices.

In an exemplary implementation, the next forwarding device does not need to generate to-be-transmitted data, and the data transmission method may be implemented through steps S230-S250, which may specifically include: obtaining the compressed bit string information in the message header of the to-be-transmitted data; querying target forwarding bit string information in a forwarding table according to the compressed bit string information and forwarding device group identification information; generating compressed bit string replacement information according to the compressed bit string information and the target forwarding bit string information, and replacing the compressed bit string information to form target transmission data; and sending the target transmission data to a next forwarding device.

It should be noted that in the mechanism based on BIER forwarding, in order to accurately send the data packet, BitStrings in the forwarding table are all stored in the format of Bitmap:ShortBitString[], and correspondingly, BitStrings in the message header are all stored in the format of Bitmap:ShortBitString[].

The forwarding table is configured according to the data format in the compressed bit string information, the compressed bit string replacement information corresponding to each next forwarding device is generated according to the information in the forwarding table, and the target transmission data is correspondingly generated and sent to each next forwarding device, so that the packet is encapsulated and forwarded according to the next forwarding device respectively, to ensure that the data packet is correctly forwarded to all next forwarding devices.

FIG. 6 is a schematic diagram of a data compression apparatus provided by an embodiment of the present application. The data compression apparatus is a corresponding apparatus for implementing the data compression method provided by the above-mentioned embodiments of the present application, and the apparatus may be arranged in a router, specifically, in a network device that uses the BIER technology for data forwarding.

The data compression apparatus includes a compressed bit string information generation module 310 and a to-be-transmitted data generation module 320. The compressed bit string information generation module 310 is configured to generate compressed bit string information according to to-be-forwarded device information of a data packet. The compressed bit string information includes at least one valid bit data and valid position information corresponding to each of the valid bit data. The valid bit data includes a valid bit in standard bit string information. The valid bit data is configured to determine a next forwarding device that receives the data packet. The valid position information includes a position of a corresponding valid bit data in the standard bit string information. An information length of the standard bit string information is greater than an information length of the compressed bit string information.

The to-be-transmitted data generation module 320 is configured to encapsulate the data packet according to the compressed bit string information, to form to-be-transmitted data.

According to the data compression method and apparatus, the network device, and the storage medium provided by the embodiment of the present application, new compressed bit string information with smaller information length is generated by extracting the valid bit data in the standard bit string information and the positions of the valid bit data in the standard bit string information, which solves the problems of large message space occupied by bit string information in some scenarios and reduction in the efficiency of data packet forwarding due to large calculation data caused by a large amount of invalid data, reduces the space occupied by the bit string information corresponding to the data packet to be forwarded, and reduces the amount of data processed during the forwarding of the data packet, thereby improving the efficiency of data packet forwarding.

In an implementation, the compressed bit string information generation module 310 is further configured to: obtain a device identification value of at least one next forwarding device of the data packet; and calculate the valid bit data corresponding to the device identification value and the valid position information of the valid bit data in the standard bit string information.

In an implementation, the compressed bit string information generation module 310 is further configured to: determine a valid length corresponding to the valid bit data according to a preset valid data type; and determine the valid bit data corresponding to the device identification value and the valid position information of the valid bit data in the standard bit string information according to the device identification value and the valid length.

In an implementation, the compressed bit string information generation module 310 is further configured to: calculate a remainder obtained by dividing a difference between the device identification value and 1 by the valid length; and set a bit at a position where a first empty bit string information matches the remainder, to form the valid bit data corresponding to the device identification value.

In an implementation, the compressed bit string information generation module 310 is further configured to: calculate a quotient by dividing the difference between the device identification value and 1 by the valid length; and set a bit at a position where a second empty bit string information matches the quotient, to form the valid position information of the valid bit data in the standard bit string information.

In an implementation, the compressed bit string information generation module 310 is further configured to: calculate a union of each of the valid bit data as valid bit string information; calculating a union of the valid position information corresponding to each of the valid bit data as position mapping information corresponding to the valid bit string information; and take the valid bit string information and the corresponding position mapping information as the compressed bit string information.

In an implementation, the data compression apparatus is further configured to: query target forwarding bit string information in a forwarding table according to the compressed bit string information and forwarding device group identification information after forming the to-be-transmitted data; generate compressed bit string replacement information according to the compressed bit string information and the target forwarding bit string information, and replace the compressed bit string information to form target transmission data; and send the target transmission data to a next forwarding device.

In an implementation, the data compression apparatus is further configured to: extract at least one target valid bit data and target valid position information corresponding to each of the target valid bit data from the compressed bit string information; query target forwarding bit data matched with each of the target valid bit data and target forwarding position information matched with each of the target valid position information in a forwarding table according to each of the target valid bit data, target valid position information corresponding to each of the target valid bit data, and forwarding device group identification information; calculate an intersection of the target forwarding bit data matched with the target valid bit data and the target valid bit data, and calculate an intersection of the target forwarding position information matched with the target valid position information and the target valid position information as the compressed bit string replacement information corresponding to the target valid bit data; generate a transmission data copy of the to-be-transmitted data; and replace the compressed bit string information in the transmission data copy according to the compressed bit string replacement information corresponding to the target valid bit data, to form the target transmission data matched with the target valid bit data.

The above data compression apparatus may execute the data compression method provided by the embodiments of the present application, and has corresponding functional modules and beneficial effects of the executed data compression method.

The present application provides a network device, which includes a processor and a memory. The processor is configured to execute a program stored in the memory to implement the method in the above embodiment. The network device is a router that uses BIER technology for data forwarding.

As a computer-readable storage medium, the memory may be configured to store a software program, a computer executable program and a module, such as a program instruction/module corresponding to the data compression method in the embodiments of the present application.

The memory may mainly include a program storage area and a data storage area. The program storage area may store an operating system and an application program required by at least one function. The data storage area may store data and the like created according to the use of the terminal. Additionally, the memory may include a high-speed random access memory, and may also include a non-volatile memory, such as at least one disk memory device, flash memory device, or another non-volatile solid-state memory device. In some examples, the memory may further include a memory located remotely from the processor, the remote memory may be connected to a device through a network. Examples of the above-mentioned network include, but are not limited to, the Internet, an intranet, a local area network, a mobile communication network and a combination thereof.

The present application provides a storage medium storing a computer program which, when executed by a processor, causes the processor to carry out the method in the above embodiments.

According to the data compression method and apparatus, the network device, and the storage medium provided by the embodiment of the present application, new compressed bit string information with smaller information length is generated by extracting the valid bit data in the standard bit string information and the position of the valid bit data in the standard bit string information, which solves the problems of large message space occupied by bit string information and reduction in the efficiency of data packet forwarding due to large calculation data caused by a large amount of invalid data in the existing technology, reduces the space occupied by the bit string information corresponding to the data packet to be forwarded, and reduces the amount of data processed during the forwarding of the data packet, thereby improving the efficiency of data packet forwarding.

The computer storage medium of the embodiments of the present application may adopt any combination of one or more computer-readable media. The computer-readable medium may be a computer-readable signal medium or a computer-readable storage medium. The computer-readable storage medium may be, for example, but not limited to, an electronic, magnetic, optical, electromagnetic, infrared, or semiconductor system, apparatus or device, or a combination of any of the above. More specific examples (non-exhaustive list) of computer-readable storage media include: electrical connection with one or more wires, portable computer diskette, hard disk, RAM, read only memory (ROM), erasable programmable read only memory (EPROM), flash memory, optical fiber, portable CD-ROM, optical storage device, magnetic storage device, or any suitable combination of the foregoing. In this document, the computer-readable storage medium may be any tangible medium that contains or stores a program that may be used by or in combination with an instruction execution system, an apparatus or a device.

A computer-readable signal medium may include a propagated data signal with computer readable program code embodied therein, for example, in baseband or as part of a carrier wave. Such propagated data signals may take a variety of forms including, but not limited to, electromagnetic signals, optical signals, or any suitable combination of the foregoing. The computer-readable signal medium may also be any computer-readable medium other than a computer-readable storage medium that may send, propagate, or transport the program for use by or in combination with an instruction execution system, an apparatus or a device.

The program code embodied in the computer readable medium may be transmitted using any appropriate medium, including but not limited to wireless, wired, optical fiber cable, radio frequency (RF), and the like, or any suitable combination of the foregoing.

The computer program code for executing the operation of the present application may be written in any combination of one or more programming languages, including an object-oriented programming language, such as Java, Smalltalk, C++ or the like, and conventional procedural programming languages, such as the "C" programming language or similar programming languages. The program code may execute entirely on a user's computer, partly on a user's computer, as a stand-alone software package, partly on a user's computer and partly on a remote computer or entirely on a remote computer or server. In the scenario where a remote computer is involved, the remote computer may be connected to a user's computer through any type of network, including a local area network (LAN) or a wide area network (WAN), or the connection may be made to an external computer (for example, through the Internet using an Internet Service Provider). The aforementioned embodiments are meant to be examples useful for understanding the invention. The present invention is only defined by the appended claims.

**Claims**

1. A data compression method, comprising:

   generating (S110, S210) compressed bit string information according to to-be-forwarded device information of a data packet;
   wherein the compressed bit string information comprises at least one valid bit data and valid position information corresponding to each of the valid bit data, the valid bit data refers to a group with at least one valid bit in standard bit string information, the valid bit refers to a bit which is set to 1 in the standard bit string information, the valid bit data has a valid length determined by a preset valid data type, the valid bit data is configured to determine a next forwarding device that receives the data packet, the valid position information comprises a position of a corresponding valid bit data in the standard bit string information, and an information length of the standard bit string information is greater than an information length of the compressed bit string information; and
encapsulating (S120, S220) the data packet according to the compressed bit string information, to form to-be-transmitted data;
wherein the generating (S110, S210) compressed bit string information according to to-be-forwarded device information of a data packet comprises:

   obtaining a device identification value of at least one next forwarding device of the data packet; and
   calculating the valid bit data corresponding to the device identification value and the valid position information of the valid bit data in the standard bit string information;

wherein the calculating the valid bit data corresponding to the device identification value and the valid position information of the valid bit data in the standard bit string information comprises:

   determining a valid length corresponding to the valid bit data according to a preset valid data type; and
   determining the valid bit data corresponding to the device identification value and the valid position information of the valid bit data in the standard bit string information according to the device identification value and the valid length;

wherein the determining the valid bit data corresponding to the device identification value according to the device identification value and the valid length comprises:

   calculating a remainder by dividing a difference between the device identification value and 1 by the valid length; and
   setting a bit at a position where a first empty bit string information matches the remainder, to form the valid bit data corresponding to the device identification value.

2. The method of claim 1, wherein the determining the valid position information of the valid bit data in the standard bit string information according to the device identification value and the valid length comprises:

   calculating a quotient by dividing the difference between the device identification value and 1 by the valid length; and

setting a bit at a position where a second empty bit string information matches the quotient, to form the valid position information of the valid bit data in the standard bit string information.

3. The method of claim 1, wherein the generating compressed bit string information comprises:

calculating a union of each of the valid bit data as valid bit string information;
calculating a union of the valid position information corresponding to each of the valid bit data as position mapping information corresponding to the valid bit string information; and
taking the valid bit string information and the corresponding position mapping information as the compressed bit string information.

4. The method of claim 1, wherein after forming the to-be-transmitted data, the method further comprises:

querying (S230) target forwarding bit string information in a forwarding table according to the compressed bit string information and forwarding device group identification information, the target forwarding bit string information referring to forwarding bit information corresponding to the valid bit data and the forwarding device group identification information in the compressed bit string information;
generating (S240) compressed bit string replacement information according to the compressed bit string information and the target forwarding bit string information, and replacing the compressed bit string information to form target transmission data; and
sending (S250) the target transmission data to a next forwarding device.

5. The method of claim 4, wherein,

the querying target forwarding bit string information in a forwarding table according to the compressed bit string information and forwarding device group identification information comprises:

extracting at least one target valid bit data and target valid position information corresponding to each of the target valid bit data from the compressed bit string information;
querying target forwarding bit data matched with each of the target valid bit data and target forwarding position information matched with each of the target valid position information in a forwarding table according to each of the target valid bit data, target valid position information corresponding to each of the target valid bit data, and forwarding device group identification information; and

the generating compressed bit string replacement information according to the compressed bit string information and the target forwarding bit string information, and replacing the compressed bit string information to form target transmission data, comprises:

calculating an intersection of the target forwarding bit data matched with the target valid bit data and the target valid bit data, and calculating an intersection of the target forwarding position information matched with the target valid position information and the target valid position information as the compressed bit string replacement information corresponding to the target valid bit data;
generating a transmission data copy of the to-be-transmitted data; and
replacing the compressed bit string information in the transmission data copy according to the compressed bit string replacement information corresponding to the target valid bit data, to form the target transmission data matched with the target valid bit data.

6. A network device, comprising a processor and a memory storing a program which, when executed by the processor, causes the processor to carry out the method of any one of claims 1 to 5.

7. A storage medium storing a computer program which, when executed by a processor, causes the processor to carry out the method of any one of claims 1 to 5.

**Patentansprüche**

1. Datenkompressionsverfahren, umfassend:

Erzeugen (S110, S210) von komprimierten Bitstring-Informationen gemäß weiterzuleitenden Vorrichtungsinformationen eines Datenpakets;
wobei die komprimierten Bitstring-Informationen mindestens gültige Bitdaten umfassen und gültige Positionsinformationen, die jedem der gültigen Bitdaten entsprechen, die Daten mit gültigem Bit sich auf eine Gruppe mit mindestens einem gültigen Bit in den Standardmäßigen Bitstring-Informationen beziehen, sich das gültige Bit auf ein Bit, das in den standardmäßigen Bitstring-Informationen auf 1 gesetzt ist, die gültigen Bitdaten eine gültige Länge aufweisen, die durch einen voreingestellten gültigen Datentyp bestimmt wird, die gültigen Bitdaten konfiguriert sind, um eine nächste Weiterleitungsvorrichtung zu bestimmen, die das Datenpaket empfängt, die gültigen Positionsinformationen eine Position von entsprechenden gültigen Bitdaten in den standardmäßigen Bitstring-Informationen umfassen, und eine Informationslänge der standardmäßigen Bitstring-Informationen größer ist als eine Informationslänge der komprimierten Bitstring-Informationen; und
Verkapseln (S120, S220) des Datenpakets gemäß den komprimierten Bitstring-Informationen, um zu übertragende Daten zu bilden;
wobei das Erzeugen (S110, S210) von komprimierten Bitstring-Informationen gemäß weiterzuleitenden Vorrichtungsinformationen eines Datenpakets Folgendes umfasst:

Erlangen eines Vorrichtungsidentifizierungswerts von mindestens einer nächsten Weiterleitungsvorrichtung des Datenpakets; und
Berechnen der gültigen Bitdaten, die dem Vorrichtungsidentifizierungswert entsprechen, und der Informationen über die gültige Position der gültigen Bitdaten in den standardmäßigen Bitstring-Informationen;
wobei das Berechnen der gültigen Bitdaten, die dem Vorrichtungsidentifizierungswert entsprechen, und der gültigen Positionsinformationen der gültigen Bitdaten in den standardmäßigen Bitstring-Informationen Folgendes umfasst:

Bestimmen einer gültigen Länge, die den gültigen Bitdaten entspricht, gemäß einem voreingestellten gültigen Datentyp; und
Bestimmen der gültigen Bitdaten, die dem Vorrichtungsidentifizierungswert entsprechen, und der gültigen Positionsinformationen der gültigen Bitdaten in den standardmäßigen Bitstring-Informationen gemäß dem Vorrichtungsidentifizierungswert und der gültigen Länge;
wobei das Bestimmen der gültigen Bitdaten, die dem Vorrichtungsidentifizierungswert entsprechen, gemäß dem Vorrichtungsidentifizierungswert und der gültigen Länge Folgendes umfasst:

Berechnen eines Rests durch Dividieren einer Differenz zwischen dem Vorrichtungsidentifizierungswert und 1 durch die gültige Länge; und
Setzen eines Bits an einer Position, an der erste leere Bitfolgeninformationen mit dem Rest übereinstimmen, um die dem Vorrichtungsidentifizierungswert entsprechenden gültigen Bitdaten zu bilden.

2. Verfahren nach Anspruch 1, wobei das Bestimmen der gültigen Positionsinformationen der gültigen Bitdaten in den standardmäßigen Bitstring-Informationen gemäß dem Vorrichtungsidentifizierungswert und der gültigen Länge Folgendes umfasst:

Berechnen eines Quotienten durch Dividieren der Differenz zwischen dem Vorrichtungsidentifizierungswert und 1 durch die gültige Länge; und
Setzen eines Bits an einer Position, an der zweite leere Bitfolgeninformationen mit dem Quotienten übereinstimmen, um die gültigen Positionsinformationen der gültigen Bitdaten in den standardmäßigen Bitfolgeninformation zu bilden.

3. Verfahren nach Anspruch 1, wobei das Erzeugen komprimierter Bitstring-Informationen Folgendes umfasst:

Berechnen einer Vereinigung der einzelnen gültigen Bitdaten als gültige Bitstring-Informationen;
Berechnen einer Vereinigung der gültigen Positionsinformationen, die jedem der gültigen Bitdaten entsprechen, als Positionszuordnungsinformationen, die den gültigen Bitstring-Informationen entsprechen; und
Nehmen der gültigen Bitstring-Informationen und der entsprechenden Positionszuordnungsinformationen als komprimierte Bitstring-Informationen.

4. Verfahren nach Anspruch 1, wobei das Verfahren nach Bilden der zu übertragenden Daten ferner Folgendes umfasst:

Abfragen (S230) von Zielweiterleitungs-Bitstring-Informationen in einer Weiterleitungstabelle gemäß den komprimierten Bitstring-Informationen und den Weiterleitungsgruppen-Identifizierungsinformationen, wobei sich die Zielweiterleitungs-Bitstring-Informationen auf Weiterleitungs-Bit-Informationen beziehen, die den gültigen Bitdaten und den Weiterleitungsvorrichtungsgruppen-Identifizierungsinformationen in den komprimierten Bitstring-Informationen entsprechen;

Erzeugen (S240) komprimierter Bitstring-Ersatzinformationen gemäß den komprimierten Bitstring-Informationen und den Zielweiterleitungs-Bitstring-Informationen, und Ersetzen der komprimierten Bitstring-Informationen, um Zielübertragungsdaten zu bilden; und

Senden (S250) der Zielübertragungsdaten an eine nächste Weiterleitungsvorrichtung.

5. Verfahren nach Anspruch 4, wobei
die Abfrage von Zielweiterleitungs-Bitstring-Informationen in einer Weiterleitungstabelle gemäß den komprimierten Bitstring-Informationen und Weiterleitungsgruppen-Identifizierungsinformationen Folgendes umfasst:

Extrahieren von mindestens gültigen Ziel-Bitinformationen und gültigen Ziel-Positionsinformation, die allen der gültigen Ziel-Bitdaten entsprechen, aus den komprimierten Bitketteninformationen;

Abfragen von Zielweiterleitungs-Bitdaten, die mit allen der Ziel-Gültig-Bitdaten übereinstimmen, und von Zielweiterleitungs-Positionsinformationen, die mit allen der Ziel-Gültig-Positionsinformationen übereinstimmen, in einer Weiterleitungstabelle gemäß allen der gültigen Ziel-Bitdaten, der gültigen Ziel-Positionsinformationen, die allen der gültigen Ziel-Bitdaten entsprechen, und der Weiterleitungsvorrichtungsgruppen-Identifizierungsinformationen; und

wobei das Erzeugen komprimierter Bitstring-Ersatzinformationen gemäß den komprimierten Bitstring-Informationen und den Zielweiterleitungs-Bitstring-Informationen und Ersetzen der komprimierten Bitstring-Informationen, um Zielübertragungsdaten zu bilden, Folgendes umfasst:

Berechnen einer Schnittmenge der Zielweiterleitungs-Bitdaten, die mit den gültigen Ziel-Bitdaten übereinstimmen, und der gültigen Ziel-Bitdaten, und Berechnen einer Schnittmenge der Zielweiterleitungspositionsinformationen, die mit den gültigen Zielpositionsinformationen und den gültigen Zielpositionsinformationen übereinstimmen, als die komprimierten Bitstring-Ersatzinformationen, die den gültigen Zielbitdaten entsprechen;

Erzeugen einer Übertragungsdatenkopie der zu übertragenden Daten; und

Ersetzen der komprimierten Bitstring-Informationen in der Übertragungsdatenkopie gemäß den komprimierten Bitstring-Ersatzinformationen, die den gültigen Zielbitdaten entsprechen, um die Zielübertragungsdaten zu bilden, die mit den gültigen Zielbitdaten übereinstimmen.

6. Netzvorrichtung, umfassend einen Prozessor und einen Speicher, der ein Programm speichert, das, wenn es von dem Prozessor ausgeführt wird, den Prozessor veranlasst, das Verfahren nach einem der Ansprüche 1 bis 5 durchzuführen.

7. Speichermedium, das ein Computerprogramm speichert, das, wenn es von einem Prozessor ausgeführt wird, den Prozessor veranlasst, das Verfahren nach einem der Ansprüche 1 bis 5 durchzuführen.

**Revendications**

1. Méthode de compression de données, comprenant :

la génération (S110, S210) des informations de la chaîne de bits compressée en fonction des informations du dispositif à transmettre d'un paquet de données ;

dans laquelle les informations de la chaîne de bits compressée comprennent au moins une donnée de bit valide et une information de position valide correspondant à chacune des données de bit valides, les données de bit valide désignent un groupe ayant au moins un bit valide dans les informations de la chaîne de bits standard, le bit valide désigne un bit réglé à 1 dans les informations de la chaîne de bits standard, les données de bit valides ont une longueur valide déterminée par un type de données valides prédéfini, les données de bits valides sont configurées pour déterminer un dispositif d'acheminement suivant qui reçoit le paquet de données, les informations de position valide comprennent une position de données de bits valides correspondantes dans les informations de chaîne de bits standard, et une longueur d'information des informations de chaîne de bits standard est supérieure à une longueur d'information des informations de chaîne de bits compressées ; et

l'incorporation (S120, S220) du paquet de données en fonction des informations de la chaîne de bits compressée, dans le but de former les données à transmettre ;

dans laquelle la génération (S110, S210) des informations de la chaîne de bits compressée en fonction des informations du dispositif à transmettre d'un paquet de données comprend :

l'obtention d'une valeur d'identification du dispositif d'au moins un prochain dispositif de transmission du paquet de données ; et le calcul des données de bits valides correspondant à la valeur d'identification du dispositif et à l'information sur la position valide des données de bits valides portant sur les informations de la chaîne de bits standard ;

dans laquelle le calcul des données de bits valides correspondant à la valeur d'identification du dispositif et à l'information sur la position valide des données de bits valides portant sur les informations de la chaîne de bits standard comprend :

la détermination d'une longueur valide correspondant aux données de bits valides en fonction d'un type de données valides prédéfini ; et
la détermination des données de bits valides correspondant à la valeur d'identification du dispositif et à l'information sur la position valide des données de bits valides portant sur les informations de la chaîne de bits standard en fonction de la valeur d'identification du dispositif et de la longueur valide ;
dans laquelle la détermination des données de bits valides correspondant à la valeur d'identification du dispositif en fonction de la valeur d'identification du dispositif et de la longueur valide comprend : le calcul d'un reste en divisant une différence entre la valeur d'identification du dispositif et 1 par la longueur valide ; et
le réglage d'un bit à une position dans laquelle une première information de chaîne de bits vide correspond au reste, pour former les données de bits valides correspondant à la valeur d'identification de l'appareil.

2. Méthode selon la revendication 1, dans laquelle la détermination de l'information sur la position valide des données de bits valides portant sur les informations de la chaîne de bits standard en fonction de la valeur d'identification du dispositif et de la longueur valide comprend :

le calcul d'un quotient en divisant la différence entre la valeur d'identification du dispositif et 1 par la longueur valide ; et
le réglage d'un bit à une position dans laquelle une deuxième information de chaîne de bits vide correspond au quotient, pour former les informations de position valides des données de bits valides correspondant dans les informations de la chaîne de bits standard.

3. Méthode selon la revendication 1, dans laquelle les informations de la chaîne de bits compressée comprend :

le calcul d'une union de chacune des données de bits valide comme une information de la chaîne de bits valide ;
le calcul d'une union des informations de position valides correspondant à chacune des données de bits valides en tant qu'informations de mappage de position correspondant aux informations de la chaîne de bits valides ; et
l'information de la chaîne de bits valide et l'information de mappage de position correspondante sont considérées comme l'information de la chaîne de bits compressée.

4. Méthode selon la revendication 1, dans laquelle, une fois formées les données à transmettre, la méthode comprend en outre :

l'interrogation (S230) des informations de la chaîne de bits de transmission cible dans une table de transmission en fonction des informations de la chaîne de bits compressée et des informations d'identification du groupe de dispositifs de transmission, les informations de la chaîne de bits de transmission cible se référant aux informations de bits de transmission correspondant aux données de bits valides et aux informations d'identification du groupe de dispositifs de transmission dans les informations de la chaîne de bits compressée ;
la génération (S240) d'informations de remplacement de la chaîne de bits compressée en fonction des informations de la chaîne de bits compressée et des informations de la chaîne de bits de transmission cible, et le remplacement des informations de la chaîne de bits compressée pour former les données de transmission cible ; et
l'envoi (S250) des données de transmission cibles à un dispositif de transmission suivant.

5. Méthode selon la revendication 4, dans laquelle l'interrogation des informations de la chaîne de bits de transmission cible dans une table de transmission en fonction des informations de la chaîne de bits compressée et des informations d'identification du groupe de dispositifs de transmission comprend :

l'extraction d'au moins une donnée de bit valide cible et d'une information de position valide cible correspondant à chacune des données de bits valides cibles à partir de l'information de chaîne de bits compressée ;
l'interrogation des données binaires de transmission cibles correspondant à chacune des données binaires valides cibles et des informations de position de transmission cible correspondant à chacune des informations de position valide cible dans une table de transmission en fonction de chacune des données binaires valides cibles, des informations de position valide cible correspondant à chacune des données binaires valides cibles, et des informations d'identification de groupe de dispositifs de transmission ; et

la génération d'informations de remplacement de la chaîne de bits compressée en fonction des informations de la chaîne de bits compressée et des informations de la chaîne de bits de transmission cible, et le remplacement des informations de la chaîne de bits compressée pour former les données de transmission cibles, comprend :

le calcul d'une intersection entre les données de bits de transmission cibles correspondant aux données de bits valides cibles et les données de bits valides cibles, et le calcul d'une intersection entre les informations de position de transmission cibles correspondant aux informations de position valides cibles et les informations de position valides cibles en tant qu'informations de remplacement de la chaîne de bits compressées correspondant aux données de bits valides cibles ;

la génération d'une copie des données de transmission des données à transmettre ; et le remplacement des informations de la chaîne de bits comprimée dans la copie des données de transmission en fonction des informations de remplacement de la chaîne de bits comprimée correspondant aux données de bits valides cibles, afin de former les données de transmission cibles correspondant aux données de bits valides cibles.

6. Dispositif de réseau comprenant un processeur et une mémoire stockant un programme qui, lorsqu'il est exécuté par le processeur, amène le processeur à exécuter la méthode selon l'une quelconque des revendications 1 à 5.

7. Support de stockage stockant un programme informatique qui, lorsqu'il est exécuté par un processeur, permet à ce dernier de mettre en œuvre la méthode selon l'une quelconque des revendications 1 à 5.

Generate compressed bit string information
according to to-be-forwarded device
information of a data packet

S110

Encapsulate the data packet according to the
compressed bit string information, to form
to-be-transmitted data

S120

FIG. 1

（A）— — — — — — ·（B）— — — — — — ·（C）— — — — — — ·（D）
256                                                                                    1

（E）                （F）
100                  2

FIG. 2

```
┌─────────────────────────────────────────────────────────┐
│  Generate compressed bit string information according    │  ⌇ S210
│  to to-be-forwarded device information of a data packet  │
└─────────────────────────────────────────────────────────┘
                            │
                            ▼
┌─────────────────────────────────────────────────────────┐
│  Encapsulate the data packet according to the compressed │  ⌇ S220
│  bit string information, to form to-be-transmitted data  │
└─────────────────────────────────────────────────────────┘
                            │
                            ▼
┌─────────────────────────────────────────────────────────┐
│  Query target forwarding bit string information in a     │
│  forwarding table according to the compressed bit string │  ⌇ S230
│  information and forwarding device group identification  │
│                    information                           │
└─────────────────────────────────────────────────────────┘
                            │
                            ▼
┌─────────────────────────────────────────────────────────┐
│  Generate compressed bit string replacement information  │
│  according to the compressed bit string information and  │
│  the target forwarding bit string information, and replace│  ⌇ S240
│  the compressed bit string information to form target    │
│                  transmission data                       │
└─────────────────────────────────────────────────────────┘
                            │
                            ▼
┌─────────────────────────────────────────────────────────┐
│           Send the target transmission data              │  ⌇ S250
│             to a next forwarding device                  │
└─────────────────────────────────────────────────────────┘
```

FIG. 3

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|              BIFT-id              | TC  |S|      TTL          |
+-+-+-+-+-+-+-+-+-+-+-+-+-+-+-+-+-+-+-+-+-+-+-+-+-+-+-+-+-+-+-+-+
|Nibble |  Ver  |  BSL  |               Entropy               |
+-+-+-+-+-+-+-+-+-+-+-+-+-+-+-+-+-+-+-+-+-+-+-+-+-+-+-+-+-+-+-+-+
|OAM|Rsv|   DSCP   |   Proto   |          BFIR-id              |
+-+-+-+-+-+-+-+-+-+-+-+-+-+-+-+-+-+-+-+-+-+-+-+-+-+-+-+-+-+-+-+-+
|                 Bitmap:ShortBitString                      ~
+-+-+-+-+-+-+-+-+-+-+-+-+-+-+-+-+-+-+-+-+-+-+-+-+-+-+-+-+-+-+-+-+
~                                                            ~
+-+-+-+-+-+-+-+-+-+-+-+-+-+-+-+-+-+-+-+-+-+-+-+-+-+-+-+-+-+-+-+-+
```

FIG. 4

| BFR-id<br>(SI:Bitmap:ShortBitString) | F-BM<br>(Bitmap:ShortBitString) | BFR-NBR |
|---|---|---|
| 1 (0:0x00000001:0x01) | 0x00000001:0x03 | C |
| 2 (0:0x00000001:0x02) | 0x00000001:0x03 | C |
| 100 (0:0x00001000:0x08) | 0x00001000:0x08 | E |
| 256 (0:0x80000000:0x80) | 0x80000000:0x80 | A |

FIG. 5

```
┌─────────────────────────────────┐
│      Compressed bit string       │
│   information generation module  │ ~310
└─────────────────────────────────┘
                 │
┌─────────────────────────────────┐
│      To-be-transmitted data      │
│        generation module         │ ~320
└─────────────────────────────────┘
```

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160127142 A1

- US 20160127139 A1